# FASCICULE DE BREVET EUROPEEN

(11) **EP 0 820 135 B1**
(45) Date de publication et mention de la délivrance du brevet: **25.09.2002**
(21) Numéro de dépôt: 97410072.9
(22) Date de dépôt: 09.07.1997
(51) Int. Cl.: H02H 9/02, H01L 27/06

(54) **Microdisjoncteur statique autoblocable**
Statischer selbsthaltender Mikroschalter
Static self-holding micro-switch

(30) Priorité: 16.07.1996 FR 9609132
(43) Date de publication de la demande: 21.01.1998
(73) Titulaire: STMicroelectronics S.A., 92120 Montrouge (FR)
(72) Inventeur: Quoirin, Jean-Baptiste, 37100 Tours (FR); Jalade, Jean, 31320 Castanet-Tolosan (FR); Sanchez, Jean-Louis, 31750 Escalquens (FR); Laur, Jean-Pierre, 81000 Albi (FR)
(74) Mandataire: de Beaumont, Michel

(56) Documents cités:
- EP-A- 0 675 584
- EP-A- 0 684 677

## Description

La présente invention concerne le domaine des composants semiconducteurs et plus particulièrement des composants de moyenne ou forte puissance.

Dans ce domaine, on connaît des composants destinés à être disposés en série avec une charge et ayant pour fonction de limiter le courant dans cette charge à une valeur maximum prédéterminée. Pour cela, on utilise par exemple un transistor MOS à déplétion dont la grille est connectée à la source. On connaît aussi des composants ayant une fonction de disjoncteur.

Le document EP-A-0 675 584 décrit un dispositif limiteur de courant selon l'art antérieur.

La demande de brevet français FR-A-2 742 933 du 20 décembre 1995 au nom de la demanderesse décrit un composant statique et monolithique ayant la double fonction de limiteur de courant et de disjoncteur. Un tel composant laisse passer un courant de valeur limitée tant que la tension à ses bornes n'excède pas un seuil de déclenchement déterminé puis interrompt la circulation de courant au-delà de ce seuil. Ce composant est autoréamorçable, c'est-à-dire qu'il refonctionne en limiteur de courant dès que la tension à ses bornes passe en dessous d'un seuil de réamorçage déterminé.

Le composant de ce document présente la caractéristique illustrée en figure 1. Tant que la tension à ses bornes est inférieure à une tension de disjonction VD, le courant est limité à une valeur Ion sensiblement constante. Dès que la tension aux bornes du composant dépasse la valeur VD, le courant chute à une valeur Ioff faible devant Ion, d'où il résulte que le courant dans le circuit incluant le composant est sensiblement interrompu.

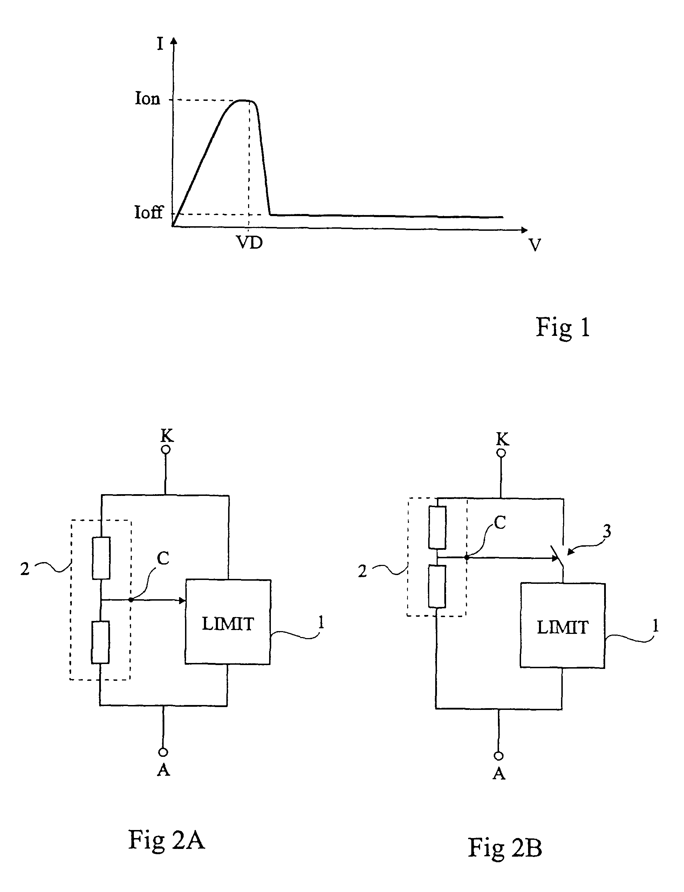

Le document susmentionné prévoit deux architectures permettant d'atteindre le résultat souhaité, représentées sous forme de blocs en figures 2A et 2B.

Le composant de la figure 2A est destiné à être connecté entre des bornes A et K, la borne A ou borne d'anode étant positive par rapport à la borne K ou borne de cathode. Il comprend, entre ces bornes, un limiteur de courant 1 et un détecteur de tension 2. Le détecteur de tension est par exemple un diviseur de tension qui fournit sur une borne C une tension de commande VC quand la tension entre les bornes A et K atteint la valeur de disjonction VD. La tension VC commande le limiteur de courant 1 pour inhiber son fonctionnement, c'est-à-dire le rendre bloquant.

Dans le mode de réalisation illustré en figure 2B, le détecteur de tension 2 entraîne l'ouverture d'un commutateur 3, en série avec le limiteur 1, quand la tension entre les bornes A et K atteint la valeur VD.

La demande de brevet susmentionnée décrit des modes de réalisation du détecteur de tension dans lesquels ce détecteur est constitué d'un diviseur de tension 2 comprenant deux transistors MOS à canal N à déplétion connectés en série et fonctionnant en tant que résistances non linéaires. Chacun de ces transistors MOS a sa grille connectée à sa source.

Il est indiqué que, pendant les phases de coupure, le courant d'extinction Ioff correspond pour l'essentiel au courant dans le détecteur 2.

Ce courant d'extinction non nul n'est souvent pas un inconvénient pour la fonction recherchée, pour autant qu'il soit assez faible, car il peut en particulier être utilisé comme signal de détection après le déclenchement du disjoncteur.

Toutefois, il existe des applications dans lesquelles on souhaite avoir un courant d'extinction d'intensité nulle, et ce d'autant plus que, au delà de la tension VD, contrairement à ce qui est représenté de façon simplifiée dans la figure 1, le courant Ioff croît avec la tension.

Ainsi, un objet de la présente invention est de réaliser un composant statique monolithique limiteur de courant et disjoncteur qui présente une très forte impédance série dans l'état de disjonction.

Pour atteindre cet objet la présente invention prévoit un composant microdisjoncteur statique autoblocable comprenant un premier transistor MOS à déplétion d'un premier type connecté par son drain à une première borne principale et par sa grille à une deuxième borne principale, un deuxième transistor MOS à déplétion de type complémentaire connecté par son drain à la deuxième borne principale et par sa source à la source du premier transistor, et un troisième transistor MOS à déplétion du premier type connecté par son drain à la première borne principale, par sa grille à la deuxième borne principale, et par sa source à la grille du deuxième transistor.

Selon un mode de réalisation de la présente invention, les premier et troisième transistors MOS à déplétion sont de type IGBT.

Selon un mode de réalisation de la présente invention, le composant comprend en outre une diode Zener connectée entre grille et drain du deuxième transistor.

Selon un mode de réalisation de la présente invention, les premier et troisième transistors MOS sont de type vertical et le deuxième de type latéral.

Selon un mode de réalisation de la présente invention, le composant est réalisé dans un substrat de silicium de type N.

Par rapport à la solution décrite dans la demande de brevet susmentionnée, on notera que, selon la présente invention, les fonctions de limiteur, de détecteur et de disjoncteur sont imbriquées dans des mêmes composants, le seuil de disjonction étant déterminé par une tension de seuil de transistor MOS.

Ces objets, caractéristiques et avantages de la présente invention seront exposés en détail dans la description suivante de modes de réalisation particuliers faite à titre non-limitatif en relation avec les figures jointes parmi lesquelles :
la figure 1 représente la caractéristique courant-tension d'un dispositif limiteur-disjoncteur ;
les figures 2A et 2B sont deux schémas sous forme de blocs illustrant deux exemples d'architecture générale d'un dispositif limiteur-disjoncteur ;
la figure 3 représente le schéma d'un composant limiteur-disjoncteur selon la présente invention ; et
la figure 4 représente un exemple de réalisation du composant limiteur-disjoncteur selon la présente invention.

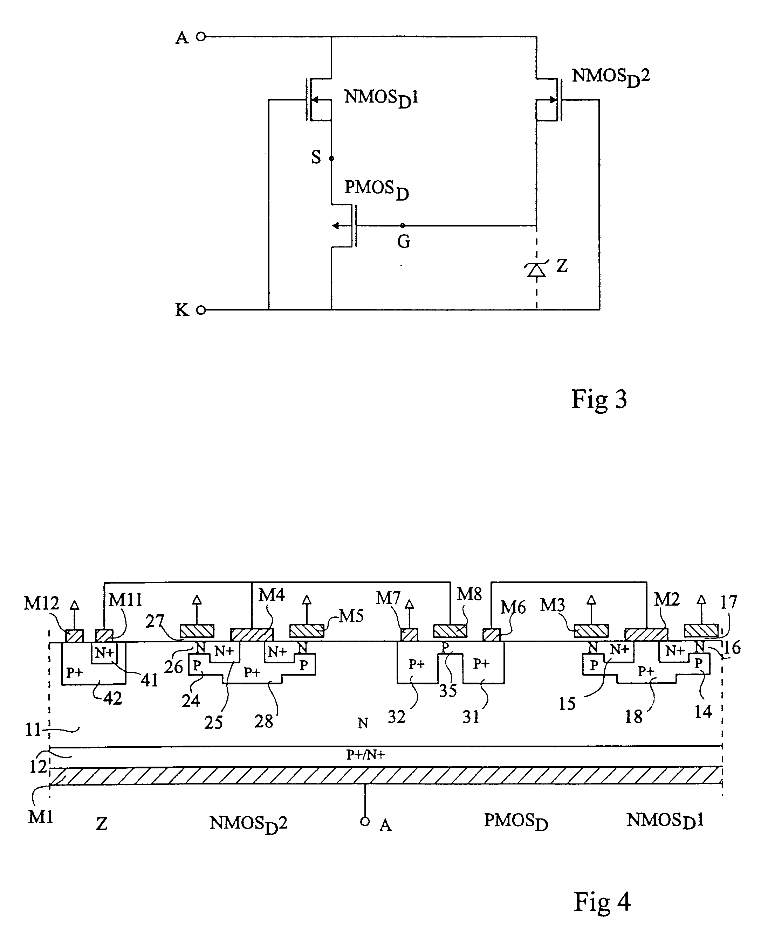

Un composant selon la présente invention met en oeuvre le circuit illustré en figure 3 qui est destiné à être connecté à deux bornes A et K, la borne A étant positive par rapport à la borne K.

Deux transistors MOS à déplétion à canal N NMOS_{D}1 et NMOS_{D}2 ont leurs drains connectés à la borne A et leurs grilles connectées à la borne K. Un transistor MOS à canal P PMOS_{D} a sa source connectée à la source du transistor NMOS_{D}1, sa grille connectée à la source du transistor NMOS_{D}2 et son drain relié à la borne K. Le substrat du transistor PMOS_{D} est flottant, ce qui permet, pendant ses phases de conduction et de blocage, de fixer son potentiel au voisinage de la tension de drain grâce au phénomène d'autoblindage obtenu dans une structure intégrée de type MOS multicellulaire.

Ainsi, on peut considérer que le transistor NMOS_{D}1 a sa source connectée à sa grille par l'intermédiaire du transistor PMOS_{D} et que le transistor PMOS_{D} a sa grille reliée à sa source par l'intermédiaire des transistors NMOS_{D}2 et NMOS_{D}1.

Le circuit de la figure 3 passe par trois phases de fonctionnement qui correspondent sensiblement à ce qui est représenté en figure 1.

Dans une première phase, les transistors à déplétion NMOS_{D}1 et PMOS_{D} fonctionnent comme deux résistances de faible valeur en série et le courant croît proportionnellement à la tension jusqu'à atteindre une valeur Ion.

Dans une deuxième phase, l'un ou l'autre des transistors NMOS_{D}1 et PMOS_{D} entre en saturation et limite la valeur du courant à la valeur Ion susmentionnée.

Dans une troisième phase, on passe à un état de disjonction. Ensuite, le transistor NMOS_{D}2 se bloque à son tour. Pour expliquer l'entrée dans la phase de disjonction, il faut distinguer le cas où le transistor NMOS_{D}1 entre le premier en saturation du cas où le transistor PMOS_{D} entre le premier en saturation. Pour un disjoncteur donné, ce choix se fait lors de l'étape de conception en réglant les paramètres physiques et technologiques de la région de canal de ces deux dispositifs.

Dans le cas où le transistor NMOS_{D}1 entre le premier en saturation, quand la tension VA continue à croître, on arrive à un stade où le potentiel VG sur la grille du transistor PMOS_{D} (qui est sensiblement égal au potentiel de la borne A du fait que le transistor NMOS_{D}2 est un transistor à déplétion qui est conducteur à ce moment là) devient supérieur à la tension de seuil définie entre la grille et le substrat de ce transistor. Comme indiqué précédemment, la tension de substrat est, dans ces conditions, voisine de la tension de drain (point K). Ainsi le transistor PMOS_{D} se bloque. La tension source-drain augmente alors faisant croître le potentiel du point S. Lorsque la tension de ce point S devient supérieure à la tension de seuil du transistor NMOS_{D}1, ce dernier se bloque à son tour. La tension anode-cathode continue de croître et le potentiel de la source du transistor NMOS_{D}2 suit cette valeur (moins la chute de tension dans ce transistor). Ainsi le transistor NMOS_{D}2 se bloque à son tour lorsque la tension source-grille qui lui est appliquée devient égale à sa tension de seuil. Il est clair que la tension de seuil du transistor NMOS_{D}2 doit être supérieure à celle des deux autres transistors. Dans cette configuration, les trois transistors sont à l'état bloqué et aucun courant de fuite ne traverse en principe le disjoncteur. Si toutefois un courant dû à une variation dV_{AK}/dt et/ou un courant de fuite sous le seuil existent dans le transistor NMOS_{D}2, il est prudent de placer une diode Zener comme cela est indiqué en figure 3 afin de protéger la grille du transistor PMOS_{D}.

Dans le cas où le transistor PMOS_{D} entre le premier en saturation, quand le potentiel sur la borne A continue à croître, le potentiel VS sur la source S du transistor NMOS_{D}1 devient supérieur au potentiel de grille de ce transistor. Quand la différence excède la tension de seuil de ce transistor NMOS_{D}1, celui-ci se bloque. La tension VAK continue de croître, le potentiel du point G croît également, et le transistor PMOS_{D} se bloque à son tour pour les mêmes raisons que précédemment. Les transistors NMOS_{D}1 et PMOS_{D} sont bloqués et le transistor NMOS_{D}2 se bloque à son tour car la tension VAK continue de croître et le potentiel de source du transistor NMOS_{D}2 atteint une valeur telle que sa tension source-grille devient égale puis supérieure à sa tension de seuil. Naturellement, les précautions prises précédemment au niveau des tensions de seuil et des protections envisagées restent de rigueur.

Le circuit selon la présente invention est susceptible de diverses variantes et modifications qui apparaîtront à l'homme de l'art. En particulier, celui-ci comprendra que le fonctionnement du circuit reste le même si les transistors NMOS_{D}1 et NMOS_{D}2 sont remplacés par des transistors IGBT.

La figure 4 représente un exemple de réalisation monolithique du circuit de la figure 3.

Conformément à l'usage, la figure 4 constituant une vue en coupe de composant semiconducteur n'est pas à l'échelle. L'homme de l'art se référera à ses connaissances générales pour la détermination des épaisseurs et des niveaux de dopage des diverses couches. Les surfaces occupées par ces diverses couches ou le nombre de cellules constituant un composant élémentaire seront, de façon connue, choisis en fonction de la technologie utilisée et des impératifs de dissipation de puissance. De même, les distances entre les divers caissons P seront optimisées afin d'assurer un effet d'autoblindage.

En figure 4, on a représenté de façon classique et très schématique, respectivement de droite à gauche, une cellule d'un transistor MOS vertical constituant le transistor NMOS_{D}1, un transistor MOS latéral constituant le transistor PMOS_{D}, une cellule d'un transistor MOS vertical constituant le transistor NMOS_{D}2, et une diode Zener Z.

Le transistor MOS vertical NMOS_{D}1 est formé dans une tranche de silicium 11 de type N à faible niveau de dopage comprenant du côté de sa face arrière une couche 12 fortement dopée de type N permettant la réalisation d'un contact ohmique avec une métallisation d'anode M1 recouvrant la face arrière. Le transistor NMOS_{D}1 comprend une ou plusieurs cellules dont chacune est formée dans un caisson de type P faiblement dopé 14 ayant par exemple en vue de dessus une forme hexagonale ou carrée. Du côté de la face supérieure du caisson 14 est formée une région 15 de type N⁺ ayant sensiblement une forme en anneau. La partie supérieure du caisson 14 entre la périphérie externe de l'anneau 15 et la périphérie externe du caisson 14 est occupée par une région de type N faiblement dopée 16 revêtue d'un isolant de grille 17. La partie centrale du caisson 14 correspond généralement à une région de type P plus fortement dopée 18. La surface supérieure de la région 18 et d'au moins une partie de l'anneau 15 est revêtue d'une métallisation M2. L'isolant de grille 17 est revêtu d'une métallisation M3.

La métallisation M1 de face arrière correspond au drain du transistor MOS, relié à la borne A, et la métallisation M2 constitue, au-dessus de la région 15, le contact de source et, au-dessus de la région 18, le contact de substrat.

Le transistor NMOS_{D}2 est réalisé comme le transistor NMOS_{D}1 et comprend des régions 24 à 28 correspondant respectivement aux régions 14 à 18 et des métallisations M4 et M5 correspondant respectivement aux métallisations M2 et M3. Bien entendu, le transistor NMOS_{D}2 qui n'a pas pour fonction de laisser passer du courant aura une surface très inférieure à celle du transistor NMOS_{D}1.

Ces composants sont susceptibles de diverses variantes de réalisation bien connues de l'homme de métier. Notamment, la couche semiconductrice de face arrière 12 de type N fortement dopée peut être remplacée par une couche de type P fortement dopée. On obtient alors des composants dits transistors bipolaires à grille isolée (IGBT) à déplétion (IGBT_{D}).

Le transistor latéral PMOS_{D} comprend deux régions diffusées de type P fortement dopées 31 et 32 séparées par une région de type P faiblement dopée 33 (région de canal). Des métallisations M6 et M7 sont respectivement formées sur les régions 31 et 32 et une métallisation de grille M8 est formée au-dessus de la région de canal (avec interposition d'une couche isolante).

La diode Zener Z peut être constituée d'une région N⁺ 41 formée dans un caisson P⁺ 42, la région 41 étant revêtue d'une métallisation M11 et la région 42 d'une métallisation M12. Les métallisations M2 et M6 sont connectées l'une à l'autre et correspondent à la connexion des sources des transistors NMOS_{D}1 et PMOS_{D}. Les métallisations M8, M4 et M11 sont interconnectées et correspondent à la connexion de la grille du transistor PMOS_{D} à la source du transistor NMOS_{D}2 et à la cathode de la diode Zener Z. Les autres métallisations sont reliées à la borne K, comme cela est indiqué par une flèche.

### EXEMPLE NUMERIOUE

Uniquement à titre d'exemple et sans que cela constitue une limitation de la présente invention, on va indiquer ci-dessous des valeurs numériques possibles applicables à la structure représentée schématiquement en figure 4.

Cette structure peut être formée à partir d'une tranche de silicium de type N dans un plan <100> ayant une résistance de couche de 30 ohm.cm.

Si l'on désigne par Cs la concentration superficielle d'une région et par xj la profondeur de jonction, on peut choisir pour les diverses régions les paramètres suivants.

| | Cs(at/cm³) | xj(µm) |
|---|---|---|
| régions P⁺ | 1,1.10¹⁹ | 4,35 |
| régions P | 2.10¹⁷ | 2,5 |
| régions N⁺ | 6.10¹⁹ | 1,15 |
| canaux N | 3.10¹⁶ | |

Les épaisseurs de grilles peuvent être de l'ordre de 50 nm. Les dimensions horizontales des caissons sont celles couramment choisies dans le domaine des transistors MOS de puissance, c'est-à-dire de l'ordre de 25 à 50 µm.

Avec de tels paramètres, on obtient des dispositifs supportant des tensions de 600 à 1500 V, dont le courant Ion est de 1 à 5 A et dont le courant Ioff est pratiquement nul.

Bien entendu, comme on l'a déjà indiqué au cours de cette description, chacun des éléments décrits à titre d'exemple est susceptible de diverses variantes et pourra être constitué d'une ou plusieurs cellules.

## Revendications

1. Composant microdisjoncteur statique autoblocable, **caractérisé en ce qu'**il comprend :
un premier transistor MOS à déplétion (NMOS_{D}1) d'un premier type connecté par son drain à une première borne principale (A) et par sa grille à une deuxième borne principale (K),
un deuxième transistor MOS à déplétion (PMOS_{D}) de type complémentaire connecté par son drain à la deuxième borne principale et par sa source à la source du premier transistor, et
un troisième transistor MOS à déplétion (NMOS_{D}2) du premier type connecté par son drain à la première borne principale (A), par sa grille à la deuxième borne principale (K), et par sa source à la grille du deuxième transistor.

2. Composant selon la revendication 1, **caractérisé en ce que** les premier et troisième transistors MOS à déplétion sont de type IGBT.

3. Composant selon la revendication 1, **caractérisé en ce qu'**il comprend en outre une diode Zener connectée entre grille et drain du deuxième transistor.

4. Composant selon la revendication 1, **caractérisé en ce que** les premier et troisième transistors MOS sont de type vertical et le deuxième de type latéral.

5. Composant selon la revendication 4, **caractérisé en ce qu'**il est réalisé dans un substrat de silicium de type N.

## Patentansprüche

1. Statisches selbsthaltendes Mikroschalterelement,
**dadurch gekennzeichnet, dass** es aufweist:
einen ersten MOS-Transistor vom Verarmungstyp (NMOS_{D}1) eines ersten Types, der über seine Drain-Elektrode mit einem ersten Hauptanschluss (A) und über seine Gate-Elektrode mit einem zweiten Hauptanschluss (K) verbunden ist,
einen zweiten MOS-Transistor vom Verarmungstyp (PMOS_{D}) Index) D vom komplementären Typ, der über seine Drain-Elektrode mit dem zweiten Hauptanschluss und über seine Source-Elektrode mit der Source-Elektrode des ersten Transistors verbunden ist, und
einen dritten MOS-Transistor vom Verarmungstyp (NMOS_{D}2) des ersten Types, der über seine Drain-Elektrode mit dem ersten Hauptanschluss (A), über seine Gate-Elektrode mit dem zweiten Hauptanschluss (K) und über seine Source-Elektrode mit der Gate-Eelektrode des zweiten Transistors verbunden ist.

2. Element nach Anspruch 1, **dadurch gekennzeichnet, dass** der erste und der dritte MOS-Transistor vom Verarmungstyp vom Typ IGBT sind.

3. Element nach Anspruch 1, **dadurch gekennzeichnet, dass** es darüber hinaus eine Zenerdiode aufweist, die zwischen der Gate-Elektrode und der Drain-Elektrode des zweiten Transistors verbunden ist.

4. Element nach Anspruch 1, **dadurch gekennzeichnet, dass** der erste und der dritte MOS-Transistor vom vertikalen Typ und der zweite Transistor vom lateralen Typ sind.

5. Element nach Anspruch 4, **dadurch gekennzeichnet, dass** es in einem Siliziumsubstrat vom Typ N realisiert ist.

## Claims

1. A micro-circuit-breaker static self-locking component, **characterized in that** it includes:
a first MOS depletion transistor (NMOS_{D}1) of a first type connected by its drain to a first main terminal (A) and by its gate to a second main terminal (K),
a second MOS depletion transistor (PMOS_{D}) of complementary type connected by its drain to the second main terminal and by its source to the source of the first transistor, and
a third MOS depletion transistor (NMOS_{D}2) of the first type connected by its drain to the first main terminal (A), by its gate to the second main terminal (K), and by its source to the gate of the second transistor.

2. A component according to claim 1, **characterized in that** the first and third MOS depletion transistors are of IGBT type.

3. A component according to claim 1, **characterized in that** it further includes a Zener diode connected between the gate and the drain of the second transistor.

4. A component according to claim 1, **characterized in that** the first and third MOS transistors are of vertical type and the second one is of lateral type.

5. A component according to claim 4, **characterized in that** the component is implemented in an N-type silicon substrate.
